# EUROPEAN PATENT APPLICATION

(11) **EP 2 365 135 A1**
(43) Date of publication of application: **14.09.2011**
(21) Application number: 11156895.2
(22) Date of filing: 04.03.2011
(51) Int. Cl.: E02B 9/08, F03B 13/14

(54) **Method, system and device for harnessing hydraulic head in large bodies of water**

(30) Priority: 05.03.2010 CL 1942010
(71) Applicant: Wagner Fonseca, Ernesto Rodolfo, Las Condes - Santiago (CL)
(72) Inventor: Wagner Fonseca, Ernesto Rodolfo, Las Condes - Santiago (CL)
(74) Representative: ZBM Patents

(57) **Abstract**

The invention provides a floating device, system and method for channeling, elevating, conducting and retaining up to the sea shore the higher hydraulic head of the ocean surface waves, which comprises a pontoon-like lower body (2) protected externally by vertical walls (202), a bottom slab (203) and a top slab (201), the latter slab may be the bottom or floor of the device (1); an upper body (3) with lateral walls (303) mounted on both sides of the pontoon-like lower body (2) constitutes a wave canal, where the floor or bottom of the device (1) on its seaward end has an entrance ramp (207), which together with the vertical walls on the seaward end of the pontoon (2), bank and elevate the waves collected from the flotation level of the device (1) whereas on its inland end, the bottom or floor of the device (1) has a vertical gate (205) that has the same height of the lateral walls (303) mounted on both sides of the pontoon-like inferior body (2).

## Description

### FIELD OF THE INVENTION

The invention relates to a method, system and device for harnessing hydraulic head during the movement of water in large bodies of water, more specifically, the invention provides a method and system for channeling, elevating, conducting and retaining up to the sea shore the higher hydraulic head of the water surface waves using a floating device in order to recover energy and/or use in hydraulic applications.

A portion of the disclosure of this patent document contains material which is subject to copyright protection. The copyright owner has no objection to the reproduction by anyone of the patent document or the patent disclosure, as it appears in the Patent and Trademark Office file or records, but otherwise reserves all copyrights associated with this document.

### BACKGROUND OF THE INVENTION

Because of the impact of the existing sources of energy on global warming, there exists a growing concern over the need of utilizing renewable energy sources. For example, renewable energy may be generated from large bodies of water, although, harvesting energy from the large bodies of water must take into account several factors, among which: environmental impact, adequate waste management and safety.

In fact, large bodies of water such as oceans, lakes, rivers etc. hold a substantial amount of kinetic energy and/or potential energy carried by the movement of water in the form of waves and/or tides under the influence of gravity, wind, earth rotation etc. Ocean surface waves are generated by an array of forces including meteorological phenomena (wind, atmospheric pressure), astronomical forces (gravitational pull from the moon and the sun) and geological forces (earthquakes on the sea floor that could produce tsunamis).

The wind can transfer part of its energy to the water by friction. This is easy to see by blowing air over a glass of water and looking at the waves that are generated on the surface. On oceans and lakes, waves that are generated as a result of the wind action are called "ocean surface waves" (NOAA, 2006). The amount of energy in a single ocean wave is considerable. The hydraulic head of a group of ocean waves is proportional to the square of the wave height (from trough to crest) and to the wave period (time interval between the arrival of consecutive crests at a stationary point). Waves of longer periods have wave heights typically larger and they move faster.

The kinetic energy of the hydraulic head can be harvested. Ocean wave energy is expressed in kilowatts-hour in a particular sea shore region. During big storms, the larger waves are about 15 meters tall and have periods of about 15 seconds. This wave type has a potential energy of 1700 kilowatts per meter of wave front. A region with a large amount of wave energy can show potential energy production of 50 kilowatts per meter of wave front.

For a typical ocean surface situation with wave periods of 10 seconds, the range of energy flow is between 40 kilowatts per meter for a wave height of 1 meter (small waves) and 1000 kilowatts per meter for a wave height of 5 meters (large waves). For this latter case (tall waves), the theoretical energy available is 1000 megawatts per kilometer of shore line.

However, close to the shore line, waves are formed even without wind, as the tide currents bank and gain elevation head. Research published by the "Journal of Coastal Research of the USA" found that tidal currents exhibit speeds of 0.7 meters per second. Waves close to the shore line form because of the referred tidal forces, the wind force and also the seabed shape and depth. Those waves can be large, but as they get close to the shore they break on beaches and other types of sea borders. As they break, they dissipate energy and the water movement gets finally stopped by the beach slope. The wave speed allows its water to reach a higher elevation than the one of the sea at that point. Afterwards, the water goes back to the sea, because of the beach slope, and produces a counter current that stops and decreases the speed of the coming wave that is arriving from inside the sea. Hydraulically speaking, the counter current banks the incoming water flow forming the next wave, which has the speed of its base reduced by the counter current (the base speed can even go in reverse), the wave then takes its typical concave shape and ultimately breaks on the shore line. This breakage will depend on the depth, shape and obstacles (for example, marine rocks) found by the water on the specific shore line where the wave breaks. Still, the impact or pressure produced by the water when it reaches the shore line equals the energy that remains in the wave.

Devices that generate energy harnessed from ocean waves can be classified into either fixed or floating. Fixed generating devices are either built into the shoreline (where the waves break) or firmly fixed to the seabed on shallow waters. Importantly, the amount of appropriate places for this type of devices is limited. One fixed generation device is the so called Oscillating Water Column or OWC, which generates electricity in a two-step process. When the wave enters in a chamber, it forces the air inside the chamber to go though a turbine while increasing the pressure inside the chamber. When the wave exits the chamber, air goes back into the chamber through the turbine, because of lower air pressure on the chamber side of the turbine. No matter the air direction, the Wells turbine (named after its inventor) rotates in the same direction and allows generating electricity. Another fixed generation device is the so called TAPCHAN system, or tapered channel system, which consists of a tapered channel feeding into a reservoir that was built on a cliff. The narrowing of the channel prompts the waves to increase its amplitude (wave height) when they approach the cliff face. Eventually, the waves spill water over the channel walls and into the reservoir, which is located several meters above the mean sea level. The kinetic energy (velocity head) of the wave is transformed into potential energy (elevation head) as the water is stored in the reservoir. (http://www.osun.org/tapchan-pdf.html).

Another device, the Wave Roller, is a plate anchored on the seabed by its lower part that pivots back and forth. The back and forth movement of sea bottom waves moves the plate. The kinetic energy of the moving plate is collected by a piston pump and can be converted to electricity either by a generator used in combination with the Wave Roller or by a closed hydraulic system in combination with a turbine system. The Wave roller is appropriate for sea areas with long wave periods and big wave lengths. Due to sea bottom wave characteristics, the energy levels obtained throughout the year would fluctuate quite less than the ones obtained from devices that collect ocean surface waves or eolic energy (http://www.aw-energy.com).

On the other hand, floating generating devices are systems that float on the ocean surface either close to the shore line or offshore. The following are examples of these floating generation devices.

The Pelamis is a semi-submerged, articulated structure composed of sections which are linked by hinged joints. The movement of the joints is resisted by hydraulic rams. If forced to move, the rams pump oil through hydraulic motors. Those motors drive generators to produce electricity. The machine is anchored in position by a combination of floats and weights, which maintain the Pelamis positioned and allow it to swing head-on to oncoming waves (http://www.pelamiswave.com).

Like the Pelamis, the Salter Duck is another floating wave energy device, which generates electricity through the harmonic motion of the floating part of the device (unlike fixed systems that use a fixed turbine which is powered by the wave movement). Salter Duck devices rise and fall according to the movement of the waves and electricity is generated because of this motion. The Duck rotates with a nodding motion as the wave passes. This motion pumps a hydraulic fluid that drives a hydraulic motor, which in turn, drives an electrical generator. (Original "Salter's Duck" patent US 3,928,967, Dec 30, 1975).

The Wave Dragon is a device that elevates ocean waves to a reservoir above sea level where water is then let out through a number of turbines and in this way transformed into electricity. The Wave Dragon is anchored in relatively deep waters to take advantage of the ocean surface waves before they lose energy as they reach the shoreline. The device is designed to stay as stationary as possible. Water is temporarily stored in a large reservoir creating a head, i.e. a difference between the mean level of the ocean surface and the water surface in the reservoir. The water is let out of the Wave Dragon reservoir through several turbines generating electricity in a similar way to hydroelectric power plants. (http://www.wavedragon.net). Importantly, the Wave Dragon is neither a floating canal, nor is it designed to produce any water flow to the shore line. It can not freely float to accommodate to the different tidal levels as it is firmly anchored to the sea bottom, hence it cannot take the tidal level of the moment unless one of its anchor cables would be able to move, which in turn would make it impossible to fix the device in three independent directions. In the end, if these cables would be able to move, the Wave Dragon would not be that fixed and would move with the tidal movements, thus it would be very vulnerable to extreme meteorological conditions (i.e. storms).

Patent WO 0244557, by Albert Blum, named 'Hydraulic power' comprises an anchored floating body provided with at least one flow channel with at least one converting device, wherein mechanical energy is converted into hydraulic kinetic energy by the referred converting device. The flow channel is built so that it exploits the kinetic energy from the breaking waves. This invention requires a dock fixed to the beach to fasten one of its sides. If the other side is held with an anchor, it will not be able to always face the waves in an orthogonal manner. Importantly, this invention does not have a floating canal to transport the higher layers of the waves to the beach or sea border.

Patent GB 2367037, by John Michael Pemberton, titled "Wave energy power generating structure" refers to a floating concrete cellular structure shaped to conform to the shoreline such that the structure can then be sunk at the selected shoreline location. When in operation, the structure is permanently fixed to the seabed. The structure incorporates an apparatus for generating power from wave energy by Oscillating Water Column or Tapered Channel wave energy collection systems. In conclusion, this invention is fixed to the seabed and does not float when in operation. Its construction involves floating elements that are ultimately fixed to the seabed. As it is a fixed structure, it cannot change the position of its base to collect waves adjusting to the varying tidal levels.

On the other hand, the invention described in this application is a floating device or floating canal that transports to the beach or seashore the sea waves that move above the tidal level of the moment which constitute the layers of sea water flow with larger hydraulic head. One important characteristic of this floating canal is that it has an artificial bottom that does not keep the natural seabed slope nor drags still water. It does not waste energy by carrying sand of the seabed by friction either.

The devices that are anchored or, worse, fixed to the seabed cannot adapt to tidal changes and have to be designed with excess size or clearances as they are not able to efficiently catch water. It is difficult to keep the construction costs of such devices at reasonable levels. Therefore, there is a need for device and system for collecting the hydraulic head of the water waves taking advantage of the water layers that have better speed and elevation and also the subjacent water flow.

### SUMMARY OF THE INVENTION

The invention discloses a floating device, a system and a method for channeling, elevating, conducting and retaining up to the sea shore the hydraulic head of the sea waves in order to use it for energy generation and/or hydraulic applications. The invention provides a slightly tapered floating canal, which is set toward the inside of the sea and has a flotation level that allows the transportation of the wave water flow towards the beach.

The canal is intended to efficiently harness the largest possible part of the energy of waves formed away from the shoreline, before the waves break and therefore lose speed or height. This floating device does not end at the shore line but continues inland, beyond the high tide point. The inland end of the canal needs to be excavated to a deep enough level to assure that the canal is always floating, even at low tide. This characteristic of the invention allows avoiding expensive submarine structures allows construction on firm soil of structural piers and supplemental constructions and also allows getting the hydraulic head of the sea waves on the shore instead of the high seas. Ultimately, once the energy of the sea waves has been recovered, the water is returned to the sea.

Moreover, the construction of the canal may be repeated, and also prefabricated, which may be done either in multiple sections or in one piece. The device may be constructed from several materials, while keeping its flotation capability and structural strength needed. A non exhaustive material list includes concrete, wood, glass, steel, plastic, fiberglass, etc. The requirements for material selection comprise and depend on the cost, durability and construction conditions depending on each case.

Compared to prior art, the device of the invention may be built on any sea border condition (cliff, rocks, sandy beach, etc) providing the appropriate required excavations. Thus the device of the invention is more versatile and practical than prior art devices that pursue the recovery of sea wave energy.

The current invention provides a floating device, which has a flotation level that is predetermined and calculated according to the laws of Physics. The invention comprises: (a) A pontoon-like inferior body framed by vertical walls, a bottom slab and a top slab or cover. This cover of the pontoon also constitutes the floor or bottom of the device; (b) an upper body that has vertical walls mounted on each side of the pontoon to form the wave canal. The bottom of the wave canal located on the seaward end has an entrance ramp which, in conjunction with the vertical wall of the pontoon located also seaward, forms a hydraulic singularity that banks the water flow and elevates the wave layers collected over the flotation level of the wave canal. In addition, the present invention provides a floating system to channel, conduct and retain up to the sea shore the hydraulic head of the collected sea waves; (c) a group of pillars with their foundations resting on firm soil, pillars that are located on both sides of the floating device (wave canal) on its inland or landward end; and (d) an array of sliding supports located on pillars. These sliding supports are set at the bottom of the wave canal allowing free flotation of the device, impeding longitudinal movement of the canal but allowing the canal to move on a vertical plane that contains its longitudinal axis.

Finally, the invention provides a methodology for channeling, elevating, conducting and retaining up to the sea shore the hydraulic head of the sea waves which comprises: the provision of such floating device, excavating the current sea bed to provide with a bottom level that allows the device to float at a predetermined depth that will depend on the sea shore analysis and the materials employed for the structure of the floating device; constructing pillars with their foundations resting on firm soil; providing with sliding supports on those pillars, allowing free flotation of the device, impeding longitudinal movement of the canal but allowing the canal to move on a vertical plane that contains its longitudinal axis; and installing such floating device on the excavated sea bed, in such manner that its position matches the pillars and sliding lateral supports and that such position allows the longitudinal axis of the floating device to be as orthogonal as possible to the ocean sea wave fronts.

Among the objectives of the invention is to collect the hydraulic head of the sea waves that form close to the sea shoreline, taking advantage of the water layers that have better speed and elevation and also the subjacent water flow. The invention can change the flotation level of the device to adjust to tide moment in order to prevent or, at least, decrease the energy loss when carrying water to the seashore as the canal does not have the natural seabed as bottom. Also important, the canal has to be designed with an adequate flotation level and with enough length to catch water where the larger ocean surface waves are normally formed, adapting its flotation to the sea level that changes according to tidal conditions. In this manner, the invention utilizes the upper water flow layers and during longer periods inside the tidal cycles.

### DESCRIPTION OF THE DRAWINGS

Figure 1 is a schematic representation of the initial outline of the installation site prior to the installation of the floating canal in accordance with an embodiment of the invention.

Figure 2 is a schematic representation of a longitudinal cross section of the wave canal on the prepared site in accordance with an embodiment of the invention.

Figure 3 is a schematic representation of a transversal cross section of the wave canal on the prepared site, and a schematically represented possible lateral repetition in accordance with an embodiment of the invention.

Figure 4 shows a floor plan of the wave canal on the prepared site for an alternative with no lateral repetition in accordance with an embodiment of the invention.

Figure 5 is a flowchart representing steps involved in preparing and installing a set of floating devices to harness water movement in accordance with an embodiment of the invention.

### DETAILED DESCRIPTION OF THE INVENTION

The invention discloses a floating device, a system and a method for channeling, elevating, conducting and retaining up to the sea shore the hydraulic head of the sea waves in order to use it for energy generation and/or hydraulic applications. The invention provides a slightly tapered floating canal, which is set toward the inside of the sea and has a flotation level that allows the transportation of the wave water flow towards the beach.

In the following description, numerous specific details are set forth to provide a more thorough description of the invention. It will be apparent, however, to one skilled in the pertinent art, that the invention may be practiced without these specific details. In other instances, well known features have not been described in detail so as not to obscure the invention. The claims following this description are what define the metes and bounds of the invention.

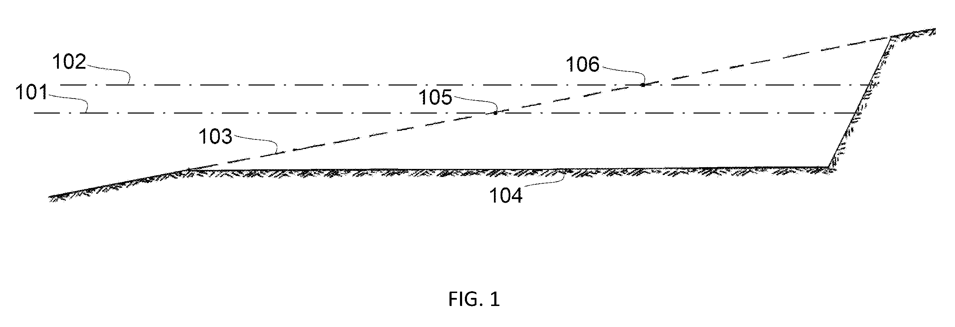

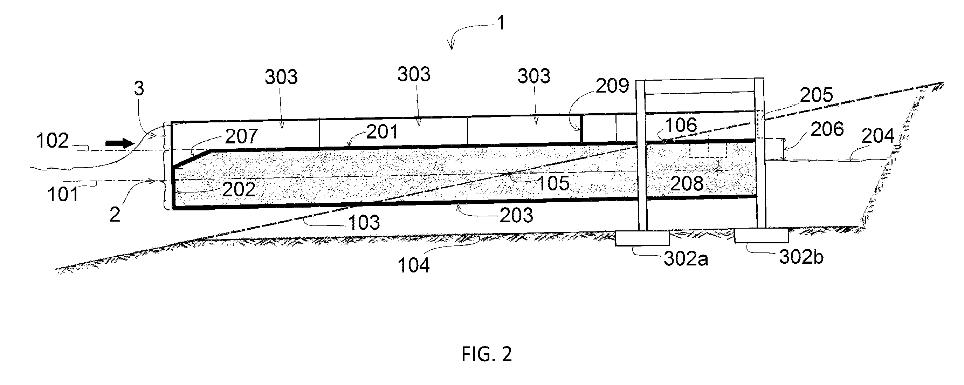

Figure 1 shows a schematic representation of the site for hosting a floating device, in accordance with an embodiment of the invention, before installing the floating device (label 1 of Fig. 2). It is necessary to prepare the site according to the particular high tide (102) and low tide (101) of the location, which defines an intertidal beach area, delimited by a high tide point (106) and a low tide point on the beach (105).

It is necessary to excavate the original sea bed (103) and provide a base level (104) up to a length, inside the sea, so that the floating device (1) can indeed float, especially with low tide conditions. The excavation characteristics will depend on a sea bed analysis, on the materials employed for building the canal structure and also the particular use of the water before it is returned to the sea.

Indeed, the length of the floating device (1) will depend on the characteristics of the sea bed, particularly, its slope and presence of rocks. On sandy beaches or beaches with moderate slope with a combination of sand and rock, in one embodiment of the invention, the length requirement to collect the wave water may be a canal that extends about 25 meters inside the sea, and may also extend inland so as the floating device may be anchored on the beach. The inland extension may be determined by the high tide point on the beach (106) and other factors such as hydraulics requirements, structural requirements and/or soil mechanics. In one embodiment, the canal length may be about 40 meters. The latter length may be significantly smaller when the sea bed slope, for example, is large or when the sea border is a rocky cliff.

It is important to ascertain the particular low and high tide levels of the location selected for each project. This will determine the exact positioning and dimensions of the corresponding floating device (1).

Figure 2 schematically depicts a longitudinal cross section of the floating device (1) in accordance with one or more embodiments of the invention. The floating device may be constructed with reinforced concrete, which is a preferred case, and comprises a pontoon-like lower body (2), which preferably would have its interior filled with expanded polystyrene (EPS). In an embodiment of the invention, the density of the EPS may be 15 kg per m3. The latter density may be adjusted to any specific application, and the type of material may be selected from any other light impermeable filling material. The impermeable characteristic of the filling ensures the pontoon will float even if the device walls present leaks (light concrete or air-entrained concrete is typically porous and can absorb water). Still, the pontoon can be hollow like a vessel if its walls are perfectly impermeable. The floating device comprises also an upper body (3) that has lateral walls (303) mounted on each side of the pontoon-like lower body (2) to form the floating device (1). These lateral walls (303) can be reinforced concrete walls or prefabricated beams having an "L" shape. The mentioned pontoon (2) may be externally protected, for example, by vertical walls (202) and a bottom slab (203), also made preferably of reinforced concrete. The pontoon comprises also an upper reinforced slab (201) which constitutes the bottom or floor of the floating device (1). The reinforced slab (201) can have a gradient or slope and/or have an impermeable membrane, so water does not leak inside the pontoon. On the seaward end of the floating device, the vertical wall of the pontoon together with a ramp (207) of the upper slab (201) bank and elevate the sea waves collected by the device (1) that is floating at the floating level (204).

To impede that the collected water goes back to the sea, retention valves or gates (209) can be used. The retention valves (209) together with the lateral walls (303) and a vertical gate (205) configure a reservoir with a bottom level that is always at a higher elevation than the sea level (204) at which the device is floating, elevation illustrated by the vertical difference (206).

The elevation head so obtained is potential energy. This energy can be harnessed by discharging the aforementioned water reservoir through a vertical outlet (208) where turbines can be installed. It is also possible to vertically discharge the water but through a lateral wall where a gate is available (205). Again, the water discharge activates some mechanism that ultimately harnesses the kinetic and potential energy of the water.

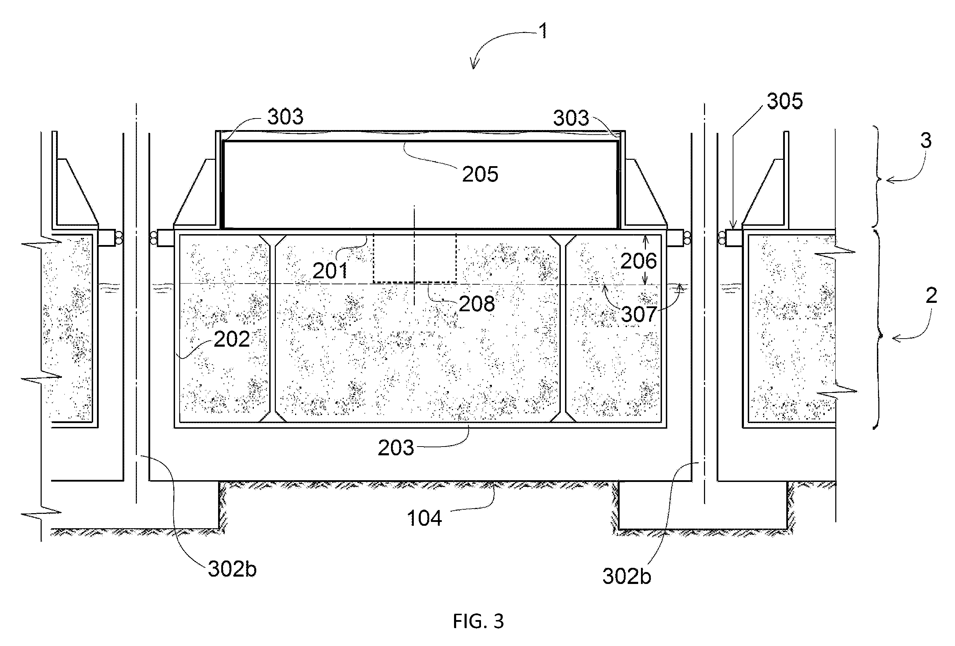

Figure 3 schematically depicts a transversal cross section of the floating device (1) in accordance with an embodiment of the invention. The design shown on Figure 3 illustrates the possibility of lateral repetition of the floating device provided by the invention. The scale of the shown elements is proportional to lateral walls (202) and bottom slab (203) built with reinforced concrete. These elements protect, frame and give structure to the light filling of the pontoon. Over the upper slab (201), lateral walls (303) are installed that are also made with reinforced concrete. These walls can be prefabricated or made on site. Also important, the floating device (1) can be modular, so prefabricated sections can be added in order to obtain the desired canal length.

Figure 3 also shows a group of pillars with their foundations (302a, 302b) resting on firm soil, pillars that are located on both sides of the floating device (1). Preferably, the design also considers sliding supports (305) located, due to structural reasons, on the upper slab (201) level and on the pillars (302a, 302b). These sliding supports allow free flotation of the device (1) and for the situation of the canal full with water, the device has a floating level (307) as seen on Figure 3. The floating level (307) is the sea level of the moment as it is determined by the equilibrium between the floating device weight and the water displaced by it (buoyancy principle).

The sliding lateral supports (305) located on the pillars on the landward end of the device and next to the gate (205), allow free vertical movement of the floating device (1) and also allow the device to rotate on a vertical plane that contains its longitudinal axis, but impede the lateral or longitudinal movement of the canal (in other words, impede it to get farther in or out the sea). Preferably, each sliding lateral support (305) on the pillars (302b) located landward is built as a car that can only move vertically along rails attached to the pillars (302b). That car has a hinge that is laterally attached to the floating device (1) and allows it to rotate on a vertical plane but impedes its longitudinal or lateral movement. On the other hand, the sliding lateral supports (305) on the pillars (302a) located closer to the sea are just cushioned restraints that impede only the lateral movement. The preferred distance between the pillars located seaward (302a) and the pillars located landward (302b), as measured along the floating device (1), will be typically smaller than the width of the floating device (1), but will be determined by structural design and the materials employed in the construction.

As an application example and for the collection of waves about 8 meters wide, the floating device (1) would typically have an average width of 10 meters. The latter size provides not only structural advantages but also efficiencies on transportation, prefabrication and assembly of the sections of prefabricated reinforced concrete. Still, the actual measures of the floating device (1) may be freely changed and customized to any specific application based on the physical parameters of the location and the intended application using the teachings of the invention. Importantly, the lateral repetition of the floating device (1) allows collecting waves of any width. The system may be adapted to the particular location where the floating device (1) is installed.

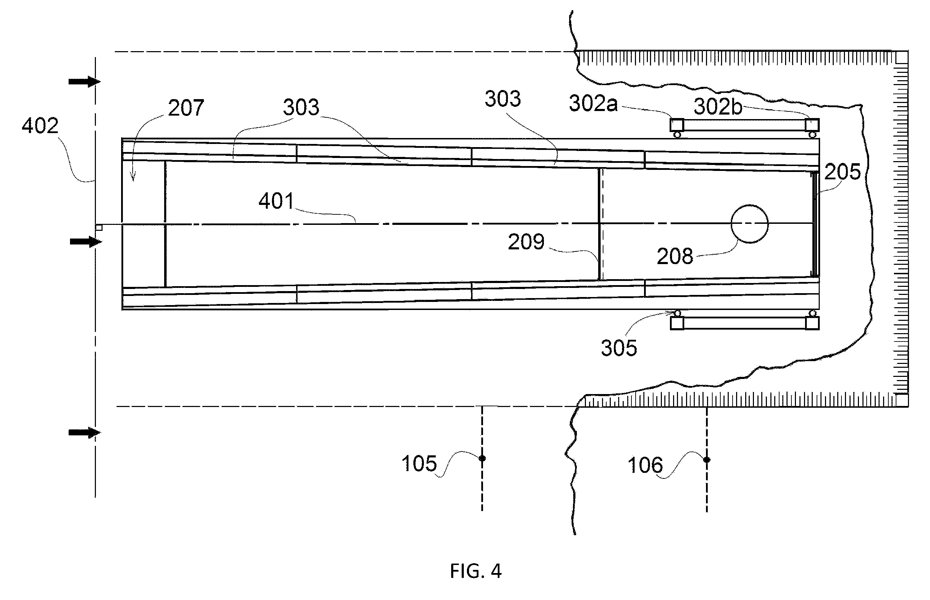

Figure 4 shows a floor plan of the present invention on the prepared site for an alternative with no lateral repetition, i.e., the figure shows a one canal case (1). The actual positioning of the floating device (1) should allow its longitudinal axis (401) to be as orthogonal as possible with the wave fronts (402) of the selected location.

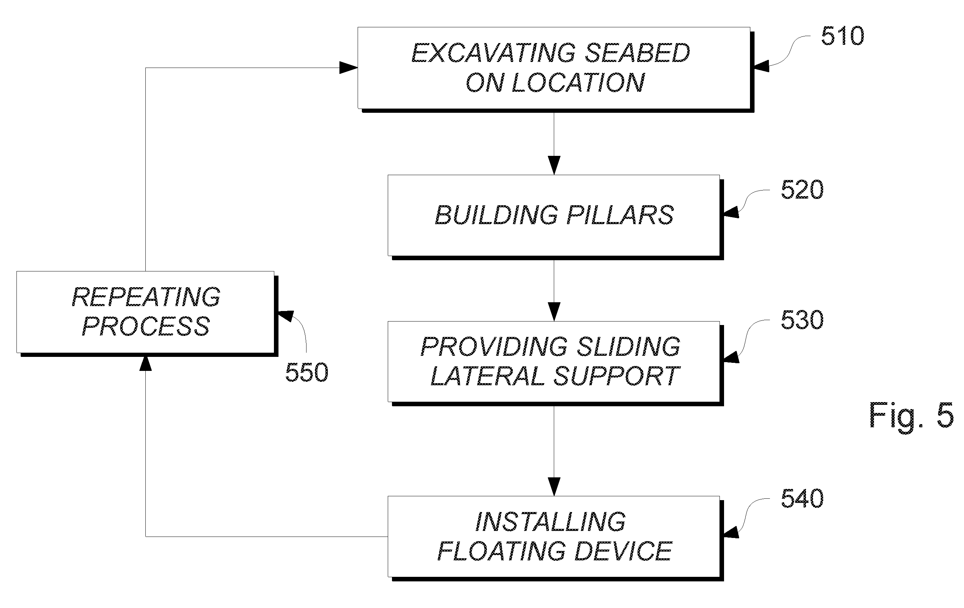

Figure 5 is a flowchart representing steps involved in preparing and installing a set of floating devices to harness water movement in accordance with an embodiment of the invention. Step 510 involves a plurality of tasks, the execution of which leads to a location on the water shore of a water body (e.g., an ocean, sea or lake) that is ready to receive a floating device in accordance with embodiments of the invention. The excavation requires carrying out a number of studies in order to plan the layout of the site for installing a device of the system. For example, geologic studies, topographical measurements, biological habitats are among the studies that may contribute to planning the excavation site. Once the physical parameters are gathered and a plan may be laid out to precisely define the contours of the site to be excavated. The site may then be excavated using heavy machinery to remove the soil. Excavating the natural seabed provides a base level up to a length, inside the sea, so that the floating device can indeed float. Such excavation will depend on seabed characteristics and on the materials employed for building the floating device structure.

At step 520, pillars are built. The pillars may be built with their foundations resting on firm soil on both sides of the floating device on the landward end of the device. Moreover, some pillars may be built further inland while other pillars may be built close to the water.

At step 530, in order to prepare for movement control of the device of the invention, sliding lateral supports are installed on the pillars and at the level of the top slab of the pontoon-like inferior body of the floating device that allows free flotation and rotation on a vertical plane that contains its longitudinal axis, but preferably impede the lateral and longitudinal movements of the device.

At step 540, a floating device in accordance with the invention may be installed on the excavated seabed, in a manner where the floating device is positioned as orthogonal as possible with the wave fronts of the selected location and that its location is consistent with the one of the pillars and sliding lateral supports.

At step 550, where an expansion of the system embodying the invention is desired, the process of multiplying the installed floating devices may be repeated. For the latter step, further studies may be required to plan and accommodate for the installation of one or more other devices.

Thus a method, system and device for channeling, elevating, conducting and retaining up to the sea shore the higher hydraulic head of the ocean surface waves for the purpose of generating energy and/or use the collected water for other hydraulic applications.

## Claims

1. A floating device (1) for channeling, elevating, conducting and retaining up to the sea shore the higher hydraulic head of the ocean surface waves, comprising:
a pontoon-like lower body (2) protected externally by vertical walls (202), said pontoon-like lower body (2) having a bottom slab (203) and an upper slab (201), said upper slab (201) serving as a support bottom of a wave canal;
an upper body (3) comprising lateral walls (303) that are mounted on both sides of said pontoon-like lower body (2), wherein said lateral walls (303) are configured to provide said wave canal, wherein the seaward end of the bottom of the wave canal having a ramp (207) that together with the vertical walls of the corresponding end of the pontoon-like lower body (2) allow for banking and elevating water waves to be collected at the level of flotation (204) of the device (1); and wherein the landward end of the device has a vertical gate (205) of the same height as the lateral walls (303) mounted on both sides of the pontoon (2).

2. The floating device of claim 1, wherein a lateral discharge outlet is located on said vertical gate (205).

3. The floating device of claim 1, wherein an outlet (208) for a vertical discharge is located on said bottom of said wave canal on its inland end.

4. The floating device of any of claims 1 to 3, further comprising at least one retention valve (209) for impeding the return of collected water back to sea, wherein said at least one retention valve (209) limits a water reservoir having a bottom level that is always at a higher elevation than the sea level (204) at which the device (1) is floating.

5. The floating device of claim 1, wherein the vertical walls (202), bottom slab (203) and upper slab (201) of the pontoon-like lower body (2) are made of a composition of materials comprising a combination or just one of the following: reinforced concrete, wood, plastic, fiberglass and steel.

6. The floating device of claim 1, wherein the pontoon-like lower body (2) has its interior filled with light expanded polystyrene.

7. The floating device of claim 1, wherein the pontoon-like lower body (2) is hollow.

8. The floating device of claim 1, wherein the lateral walls (303) of the upper body (3), mounted on both sides of the pontoon-like lower body (2), are prefabricated as reinforced concrete beams having an "L" shape.

9. The floating device of claim 1, wherein the lateral walls (303) of the upper body (3), mounted on both sides of the pontoon-like lower body (2), are built on site and/or prefabricated as reinforced concrete walls.

10. The floating device of claim 1, wherein the lateral walls (303) of the upper body (3), mounted on both sides of the pontoon-like lower body (2) are made of a composition of materials comprising a combination or just one of the following: wood, plastic, fiberglass and steel.

11. The floating device of claim 6, wherein the top part of the pontoon-like lower body (2) is a slab (201) made of a composition of materials comprising a combination or just one of the following: reinforced concrete, wood, plastic, fiberglass and steel; and is built with a gradient, and includes an impermeable membrane.

12. A floating system for channeling, elevating, conducting and retaining up to the sea shore the higher hydraulic head of the ocean surface waves, comprising:
a floating device (1) as claimed in any of claims 1 to 11;
a group of pillars (302a, 302b) with their foundations resting on firm soil, said group of pillars comprising a first set of pillars (302b) on both sides of the floating device (1) on its landward end, and a second set of pillars (302a) on both sides of the floating device (1) on its seaward end;
at least one set of sliding lateral supports (305) located on any of said first set and second set of pillars (302a, 302b) and at the bottom level of a wave canal, said at least one set of sliding lateral supports (305) allows free flotation and rotation on a vertical plane that contains its longitudinal axis, but impedes the lateral and longitudinal movement of the floating device.

13. The floating system of claim 12, wherein said at least one set of sliding lateral supports (305) further comprises a landward set of sliding lateral supports (305) built on said first set of pillars (302b), wherein said landward set of sliding supports (305) is built as a car that can only move vertically along rails attached to said first set of pillars (302b); wherein the car has a hinge that is laterally attached to the floating device (1) and allows the device to rotate on a vertical plane while impeding its longitudinal and lateral movement.

14. The floating system of claim 12, wherein said at least one set of sliding lateral supports (305) further comprises a seaward set of sliding supports (305) located of said second set of pillars (302a), wherein said seaward sliding lateral supports (305) having cushioned restraints that impede only the lateral movement of the floating device (1).

15. A method for channeling, elevating, conducting and retaining up to the sea shore the higher hydraulic head of the ocean surface waves, comprising:
a) excavating the natural seabed (103) to provide a base level up to a length, inside the sea, sufficient for a floating device (1) to float;
b) building a plurality of pillars (302a, 302b) having their foundations resting on firm soil on the landward end of the excavated seabed, a couple of pillars (302b) being more inland and another pair (302a) being located closer to the sea;
c) providing a plurality of sliding lateral supports (305) located on said pillars (302a, 302b) at the level of the top slab (201) of a pontoon-like lower body (2) of a floating device (1) once the latter is installed on the excavated seabed, allowing free flotation and rotation on a vertical plane that contains its longitudinal axis, but impede the lateral or longitudinal movement of the device; and
d) installing a floating device (1) as claimed in any of claims 1 to 11 on the excavated seabed, in a manner that it is positioned as orthogonal as possible with the wave fronts of the selected location and that its location is consistent with the pillars (302a, 302b) and sliding lateral supports (305).

16. A method as claimed in claim 15, further comprising:
e) repeating, at a location adjacent and lateral to the floating device (1), steps (a) through step (d) as many times as necessary to encompass a wave front width that suits the site conditions.
